# EUROPÄISCHE PATENTANMELDUNG

(11) **EP 1 161 859 A2**
(43) Veröffentlichungstag der Anmeldung: **12.12.2001**
(21) Anmeldenummer: 01113037.4
(22) Anmeldetag: 29.05.2001
(51) Int. Cl.: A01K 1/015

(54) **Tierstreu**

(30) Priorität: 30.05.2000 DE 10026828
(71) Anmelder: RECUTEC, 93197 Zeitlarn / Ödenthal (DE)
(72) Erfinder: Schmidmeier, Thomas, 93197 Zeitlarn/Ödenthal (DE)
(74) Vertreter: Wasmeier, Alfons, Dipl.-Ing.

(57) **Zusammenfassung**

Einstreumaterial, das inbesondere für Huftiere wie Pferde bestimmt ist, besteht aus ca 77 - 93 % gehäckseltem oder zerkleinertem Stroh, insbesondere Halmstroh, oder Sägemehl oder zu Pellets verarbeiteten Holzabfällen, ca. 5 - 15 Gewichtsprozent Zellulose und 2 - 8 Gewichtsprozent Bentonit. Dem Streumaterial werden Bitterstoffe, Bitteraromen oder dergl. Geruchs- bzw. Geschmacksstoffe und wahlweise ferner Konservierungsstoffe gegen Pilzsporen beigegeben.

## Beschreibung

Die Erfindung betrifft ein Einstreu- und Sorptionsmaterial, insbesondere für Huftiere wie Pferde und dergl., das aber auch bei Schafen, Kühen, Ziegen usw. in Stallungen verwendet werden kann.

Einstreumaterialien, insbesondere für Haustiere, wie Katzen, Hunde, Karnikel u.a. sind bekannt und werden u.a. in der DE 41 01 243 beschrieben. Diese Tierstreumaterialien bestehen aus einem Gemisch von Zellulose oder Zellulosederivaten mit Beschwerungsmitteln sowie einem oder mehreren Verdickem bzw. Bindemitteln, und liegen in Form von Partikeln vor, die eine Teilchengröße von mindestens 1 mm, insbes. von 1 - 10 mm haben. Ausgangsmaterialien für derartiges Tierstreumaterial sind u.a. Holz- und Papierabfälle, Pigmente, Zeolithe usw., die in entsprechenden Korngrößen und Gemischen angeboten werden.

Die DE 37 32 807 beschreibt ein Einstreumaterial, das insbes. für Katzen bestimmt ist. Dabei handelt es sich um sogenannte Briketts, die nicht kleiner als 5 mm sein sollen und überwiegend aus Strohmaterial, wie Strohmehl, hergestellt sind.

Auch die DE 196 17 224 betrifft ein Streumaterial bevorzugt für Katzen, das in Form fester Elemente vorliegt, die im wesentlichen aus Rückständen von pflanzlichen Substanzen, insbes. aus Frucht-Pressrückständen, z.B. Äpfeln und dergl. Früchten, Gemüseresten oder auch Zuckerrüben, gewonnen werden. Dabei können derartige Produkte zusätzlich auch als organische Bodenverbesserungsmaterialien Verwendung finden.

Ein Einstreumaterial, ebenfalls bevorzugt für Katzen und artverwandte Tiere besteht gemäß der DE 43 28 285 aus einem Gemisch von Feuchtigkeit absorbierenden Materialien, z.B. Zellulose, und einem mineralischen Zusatz, z.B. Glimmer, Vermiculit usw., wobei der Zusatz eine blättchenförmige Konstitution aufweisen soll und auf <2 mm zerkleinert ist.

Ein Futter-, Streu- oder Bodenverbesserungsmittel wird in der DE 42 01 410 beschrieben. Das Produkt wird aus Heu bzw. Stroh gewonnen und zu Pellets verpresst. Dieses Produkt dient zur Vermeidung von Staubbildung bei der Handhabung bzw. beim Ausstreuen in der Kleintierhaltung.

Alle vorbeschriebenen Materialien dienen ausschließlich als Streuprodukte für Kleintiere, wie sie z.B. in der Wohnung oder im Wohnbereich als sogenannte Haustiere gehalten werden. Bei diesen Gemischen kann es sich um streufähige Zellulose bzw. auf Zellulosebasis aufgebaute Stoffe handeln, insbes. Stroh, Häcksel, Granulat, Pulver und dergl., die jedoch nur eine bedingte Festigkeit aufweisen und deren Sorptionsvermögen für Flüssigkeiten, z.B. Urin und andere Ausscheidungen äußerst begrenzt ist. Aus diesem Grunde ist der Einsatz dieser bekannten Materialien bzw. Stoffgemische nahezu ausschließlich für häusliche Kleintiere vorgesehen, und bezüglich Festigkeit, Stabilität, Saugvermögen usw. auf häusliche Kleintiere beschränkt.

Aufgabe der Erfindung ist, ein Streu- und Sorptionsmaterial der gattungsgemäßen Art so weiter zu entwickeln, dass neben einer optimalen Sorptions- bzw. Saugfähigkeit für Flüssigkeiten wie Urin, Weichkot, Schweiss usw. eine sehr starke Geruchsbindung, eine optimale Stabilität bzw. Festigkeit, einfache und unkomplizierte Handhabung bei der Entfernung bzw. Erneuerung sowie absolute Verträglichkeit für das stehende oder liegende Tier erzielt wird. Dabei spielt auch eine evtl. Wiederverwertung und damit das Problem der besonders einfachen Entsorgung sowie ein Optimum an physikalischer Stabilität eine erhebliche Rolle, wobei dem Eigenverhalten des Huftiers Rechnung zu tragen ist. Des weiteren muss sichergestellt sein, dass das Tier dieses Material nicht frißt, um Unverträglichkeiten und mögliche Krankheiten auszuschalten.

Gemäß der Erfindung wird diese Aufgabe mit einem Streu- und Sorptionsmaterial gelöst,, das insbesondere für Huftiere, z.B. Pferde, ausgelegt ist, aus Formlingen bzw. Pellets besteht, die durch Agglomerieren geeigneter Mischungen gewonnen werden und folgende Mischungsverhältnisse haben:
ca. 77 bis 93 Gew.-% gehäckseltem bzw. zerkleinertem Stroh, oder Sägemehl oder zu Pellets verarbeiteten Holzabfällen,
ca. 5 bis 15 Gew.-% Zellulose, z.B. aus Holz, Baumwolle, Flachs, Hanf oder geeignete Oxi- und Hemizellulosen, sowie
ca. 2 bis 8 Gew.-% Bentonit, und
dem Bitterstoffe oder Bitteraromen beigegeben sind, die verhindern, dass die Tiere das Streumaterial fressen.

Das erfindungsgemäße Streumaterial ist bevorzugt für stallungsbedingte Huftiere, wie Pferde, Esel usw. entwickelt worden und trägt insbesondere der Größe und Schwere dieser Tierfamilie Rechnung. Vorzugsweise handelt es sich um ein Einstreu- und Sorptionsmaterial, das der Körpergröße und Schwere dieser Tierspezies entsprechend ausgelegt ist, also für Tiere bestimmt ist, die in landwirtschaftlichen Betrieben, in Stallungen oder Weiden untergebracht sind und ein erhebliches Maß an Streu- bzw. Unterlagmasse benötigen.

Ein derartiges Einstreumaterial zeichnet sich insbesondere durch optimale Festigkeit und hohe Absorptionswirkung sowohl für Feuchtigkeit wie Urin, Schweiss und dergl., als auch für Gase, die aus dem Dung der Tiere entstehen, aus, was vor allem für geschlossene Stallungen, in denen die Tiere, insbes. Pferde, untergebracht sind, von Bedeutung ist. Des weiteren hat dieses Streumaterial die Eigenschaft, dass es von den Tieren, insbes. Pferde, nicht gefressen wird, d.h. dass die Pferde dieses Material nicht mit dem Maul aufnehmen, sondern den Kontakt zwischen Maul und Streumaterial ablehnen, so dass damit keinerlei Gefahr besteht, dass durch das Fressen des Streumaterials Unverträglichkeiten entstehen und die Gefahr von dadurch entstehenden Krankheiten ausgeschaltet wird.

Derart aufgebaute Granulate bzw. Pellets, die durch trockenes oder schwach angefeuchtetes Mischen der einzelnen Komponenten mit anschließendem Pelletisieren und schwachem Druck und durch Einführen von Bitterstoffen in kontinuierlicher Verfahrensweise erzeugt werden, haben zweckmäßigerweise eine zylindrische Form von ca. 10 - 30 mm Länge und einen Durchmesser von ca. 5 - 10 mm. Die Pellets haben ferner eine Dichte von 1,0 - 1,3 g/cm³ bzw. ein äquivalentes Schüttgewicht von ca. 480 - 720 kg/m³. Die Erfindung ist jedoch auf die angegebenen Maße nicht beschränkt, so dass Abweichungen in der Höhe, der Länge und dem Durchmesser der Pellets im Rahmen vorliegender Erfindung möglich sind.

Des weiteren haben Pellets bzw. Granulate oder Formkörper der angegebenen Art ein Flüssigkeitsaufnahmevermögen von mindestens 100 Gew.-%, d.h. dass sie beim Einsatz in Ställen für Huftiere, insbes. Pferde, in bezug auf Volumen und Gewicht das Doppelte ihres Eigengewichtes bzw. Eigenvolumens aufnehmen können.

Nach dem Herstellen bzw. Regenerieren besitzen derartige Pellets bzw. Granulate einen Feuchtigkeitsgehalt von ca. 10 - 14 Gew.-%, der durch den Wassergehalt der eingesetzten Ausgangsmaterialien sowie den Feuchtigkeitsgehalt der zur Herstellung eingesetzten Komponenten bedingt ist. Die Bitterstoffe, die in den Pellets bzw. Granulaten integriert sind, verändern diese Eigenschaften nicht wesentlich, da verglichen mit dem Gewicht und Volumen der Stoffe, die die Zusammensetzung ausmachen, diese Bitterstoffe einen geringen Anteil haben. Derartige Bitterstoffe können beispielsweise in Form von Bitterkräutern, in Form von Fliegenholzpartikeln oder dergl. natürlichen Geruchs- und Geschmacksträgern in Pulverform, in Granulatform, in Form kleiner Kapseln, die beim Betreten des Streumaterials aufbrechen, beigegeben werden. Sie können jedoch auch in Form von Bitteraromen als Geruchs- oder Geschmacksstoffe durch Besprühen der Granulate bzw. Pellets aufgebracht werden. Andererseits können diese Bitterstoffe oder Bitteraromen in Form von Kapseln, Steinen oder dergl. in hierfür im Stallboden unter dem Streumaterial unabhängig von den Granulaten bzw. Pellets an speziellen, hierfür vorgesehenen Stellen, z.B. Ausnehmungen, Behältern oder dergl. angeordnet werden, so dass sie zwar zusammen mit dem Streumaterial wirksam werden, jedoch nicht unmittelbar an das Streumaterial gebunden sind. In der Regel ist jedoch die Anwendung von derartigen Bitterstoffen in unmittelbarer Verbindung mit dem Streumaterial zu bevorzugen, da dann keine zusätzlichen Handhabungen und Überwachungen erforderlich sind, und beim Auswechseln des Streumaterials selbsttätig die Bitterstoffe in der Streu und zusammen mit der frischen Streu bereitgestellt werden.

Zweckmäßigerweise werden dem Streumaterial Konservierungsstoffe gegen Pilzsporen beigegeben, um zu verhindern, dass die Tiere an den Hufen oder an wunden Körperstellen der Gefahr eines Pilzbefalls ausgesetzt werden und erkranken, oder aber, dass Pilzerreger auf andere Tiere übertragen werden.

Derartige Konservierungsstoffe können in Form organischer Konservierungsmittel, z.B. ätherischer Öle, wie Teebaumöl, Geraniol, Thymian, vorgesehen werden, oder aber in Form chemischer Konservierungsmittel, z.B. Propyonsäure oder Gemisch aus Propion-und Ameisensäure, Ca-Propionat, Na-Propionat, Ameisensäure, Natrium-Dihydrogen-Propionat, Ca-Acetat, Na-Acetat, Essigacetat, Essigsäure, Zitronensäure, Sorbinsäure, Benoesäure, Batriumbenoat, Slicylsäure.

Beispiele pflanzlicher Art für derartige Bitterstoffe sind u.a. folgende:
- Lignum Quassiae aus Quassiae-Rinde eines Tropenholzes mit hohem Bitterwert, das Insekten und Würmer abwehrt,
- Hopfendrüsen,
- Löwenzahnwurzel,
- Teufelskrallen,
- Colombowurzel,
- Fiberklee,
- Tausendgüldenkraut,
- Enzianwurzel,
- Pomeranzenschalen,
- Amarana,
- Getrocknetes Schöllkraut, das in frischem Zustand giftig, in getrocknetem Zustand jedoch ungiftig ist,
- Wehrmut,
- Andorn,
- Matetee.

Des weiteren werden als Beispiele für synthetische Stoffe genannt:
- Pyridin
- Pyridinbasen.

Die Erfindung ist jedoch nicht auf die vorgenannten Stoffe beschränkt.

Nach der Herstellung bzw. Regenerierung weisen die Granulate bzw. Pellets noch einen Feuchtigkeitsgehalt von ca. 10 - 14 Gew.-% auf, der durch den Wassergehalt der eingesetzten Ausgangsmaterialien sowie den Feuchtigkeitsgehalt der zur Herstellung eingesetzten Komponenten bedingt ist.

Eine Regenerierung des Streumaterials nach seiner Nutzung ist möglich, in der Regel jedoch nur als Dünger für Wiesen und landwirtschaftlich genutzte Flächen, was durch den hohen Gehalt an organischen Bestandteilen, insbes. Stickstoffverbindungen bedingt ist.

Nach der Herstellung, d.h. im Anschluss an die Mischung der Komponenten und der daran anschließenden Formgebung (Pelletisierung) bei mittlerem bis mäßigem Druck zeigen die Formstücke mit den vorgenannten Maßen beim offenen Lagern bzw. Einstreuen, z.B. den Pferdeboxen, praktisch keine Staubentwicklung, selbst nicht unter dem Gewicht der sich bewegenden Tiere.

Die Pellets gemäß der Erfindung sind trotz des relativ hohen Gehalts an organischem Material, wie Halmstroh, Holzfasern, Baumwollfasern und dergl. praktisch nicht entflammbar. Form und Festigkeit lassen nicht nach und verändern ihre Gestalt nur geringfügig unter dem Druck des sich bewegenden Tieres und in Abhängigkeit von der Menge an aufgenommenem bzw. adsorbiertem Flüssigkeitsmaterial.

Die Herstellung der erfindungsgemäßen Formlinge bzw. Pellets erfolgt auf geeigneten Druck-, Press- oder Saugeinrichtungen mit veränderlichen bzw. einstellbaren Querschnittseinstellungen. Derartige Pelletisiermaschinen sind bekannt und nicht Gegenstand der Erfindung. Selbstverständlich geht der eigentlichen Pelletisierung ein Vorbehandlungs- und Mischprozess voraus, wobei das Stroh, insbes. Halmgut von Konrmaterial, gehäckselt bzw. geschnitten, die Zellulose zerfasert und das jeweilige Bentonitmaterial als Pulver, ggf. in Gegenwart geringer Mengen bindender und flüssiger Komponenten, z.B. auch ausschließlich Wasser, untergemischt wird. Zusammen mit diesem Herstellprozess werden auch die Bitterstoffe bzw. Bitteraromen beigemischt. Die eigentliche Formgebung z.B. durch Extrudieren oder ähnliche Formgebungsprozesse erfolgt in bekannter Weise ggf. unter angepasstem Druck.

Als Bentonit im Sinne der Erfindung eignen sich praktisch alle handelsüblichen Tonarten, die ein starkes Quellungs- und Adsorptionsvermögen besitzen und deren Hauptbestandteil das Mineral Montomorillonit bildet. Derartige Bentonite sind bes. wirksam zur Ab- bzw. Adsorption von Flüssigkeiten und Gasen, dies sowohl für solche alkalischer als auch saurer Natur. Deshalb sind die vielfach verfügbaren speziellen Bentonite besonders wirksam zur Bindung von Ammoniak, Stickoxiden, Harnstoffderivaten usw. sowohl in flüssigem als auch gasförmigem Zustand.

Die erfindungsgemäßen Pellets bzw. Formlingen besitzen eine feste, jedoch poröse Konstitution und zeigen, auch unter Druck, keine Staubentwicklung.

Bei der Anwendung bzw. beim Einsatz in Stallungen, Boxen usw. für Huftiere wird das erfindungsgemäße Streumaterial im allgemeinen ganzflächig in einer Höhe bzw. Dicke vom ein- bis maximal fünffachem Durchmesser der Pellets ausgebreitet, so dasss es teppichförmig die Gesamtfläche der Box bzw. Stallung des oder der Huftiere bedeckt.

Für das Tier ist hierdurch eine feste, aber erträgliche und elastische Bodenlage gegegen, die nach erstmaligem oder auch mehrmaligem Ablassen von Urin und wichem Kot einem langsamen Zerfall der Pellets unterliegt und damit eine Art weichen Belag des Stein- oder Holzbodens der Stallung bildet. Dieser verliert dann schnell an Härte und Unsicherheit, ohne jedoch seine Saugkraft einzubüßen. Dies gilt vor allem aufgrund des hohen bzw. starken Saugvermögens der Kombination aus Strohfasermaterial, sorbierendem Gentonit und Zellulose im genannten Aufbauverhältnis.

Erst nach Tagen, vielfach erst nach Wochen als Funktion der Verweilzeit des bzw. der Tiere auf der gegebenen Bodenfläche, nimmt die Weichheit des gestreuten _{"}Teppichs" eine Konsistenz an, die einen Wechsel des Streumaterials erforderlich macht.

Damit sind die vorteihaften Eigenschaften des neuartigen Streumaterials noch nicht erschöpft. Es hat sich nämlich herausgestellt, dass das nunmehr _{"}nasse", d.h. Urin und weitere absorbierte Flüssigkeiten, sowie Gase in den Flüssigkeiten, enthaltende Material von weicher, aber immer noch bröckeliger Konsistenz als hervorragender Dünger nicht nur für Wiesen und Weiden geeignet ist, sondern aufgrund des hohen Ammonium-, d.h. Stickstoffgehalts auch zur Düngung von Halm- und Wurzelgut wie Getreide, Kartoffeln, Rüben usw. wirksam ist, so dass das neuartige Streugut für Huftiere keiner Entsorgung im herkömmlichen Sinne bedarf.

In diesem Zusammenhang sei noch darauf hingewiesen, dass einem Zusatz an Fungiziden, Insektiziden oder weiteren landwirtschaftlich geeigneten und für das Tier verträglichen bzw. unschädlichen Stoffen direkt bei der Herstellung der Pellets nichts im Wege steht, so dass das _{"}verbrauchte" Material nach der Entnahme aus dem Stall bzw. der Tierbox direkt als vielfach wertvolles, gezieltes Misch- bzw. Düngermittel verwendet werden kann.

Auch ist zu erwähnen, dass beim Herstellungsprozess der Pellets in den Rohstoffen bzw. Ausgangsmaterialien enthaltende Schädlinge wie Amöben, Insekten, Würmer, Pilze usw. abgetötet bzw. vernichtet werden.

Zusammenfassend liefert das neue Streumaterial eine optimale Lagergrundlage, insbes. für Huftiere, die eine äbsolute Hygiene vermittelt, hohe Festigkeit bei optimalem Adbzw. Absorptionsvermögen für Flüssigkeiten, semifluide Exkremente und Geruchsbildner aufweist, so dass derartige Schadstoffe nicht nur eliminiert, sondern als adsorbierte Begleitstoffe in Düngemitteln mit hohem N- und P-Gehalt eine einfache Entsorgung bietet.

Die geometrische Form der Streumaterialien kann neben der Zylinderkonfiguration auch andere Formen wie Quader oder Kuben mit ähnlichen Maßen wie für die Zylinder umfassen.

Bevorzugt wird das neuartige Streumaterial für Huftiere in hierzu geeigneten speziellen Fabrikationsanlagen im kontinuierlichen Prozeß hergestellt und in geeigneten Verpackungen wie Papiersäcken, Containern usw. dem Verbraucher geliefert. Dabei sei darauf verwiesen, dass das verbrauchte, d.h. gesättigte Material in einer Art von Recycling-Prozess im Herstellungsbetrieb wieder aktiviert werden kann, obwohl der Verwendung als Düngemittel aus ökonomischen Gründen der Vorzug zu geben ist.

## Patentansprüche

1. Streumaterial, insbesondere für Huftiere wie Pferde oder dergl., die in Ställen, Tierboxen oder auf eingezäunten Freiflächen untergebracht sind und ein erhebliches Maß an flüssigen und semiflüssigen bzw. saugfähigen Exkrementen liefern, **dadurch gekennzeichnet, dass** das Streumaterial besteht aus
ca. 77 - 93 Gew.-% gehäckseltem oder zerkleinertem Stroh, insbes. Halmstroh, oder Sägemehl, oder zu Pellets verarbeitenden Holzabfällen,
ca. 5 - 15 Gew.-% Cellulose,
ca. 2 - 8 Gew.-% Bentonit, und
dass dem Streumateiral Bitterstoffe, Bitteraromen oder dergl. Geruchs- bzw. Geschmacksstoffe und/oder Konservierungsstoffe gegen Pilzsporen beigegeben sind, die verhindern, dass die Tiere das Streumaterial fressen.

2. Streumaterial nach Anspruch 1, **dadurch gekennzeichnet, dass** es ein durchschnittliches Schüttgewicht von ca. 480 - 720 kg/m³ besitzt.

3. Streumaterial nach Anspruch 1 oder 2, **dadurch gekennzeichnet, dass** es in Form von geometrisch orientierten, insbesondere zylindrischen Formlingen bzw. Pellets vorliegt.

4. Streumaterial nach einem der Ansprüche 1 - 3, **dadurch gekennzeichnet, dass** die Formlinge oder Pellets eine durchschnittliche Länge (Höhe) von ca. 10 - 50 mm, vorzugsweise 10 - 30 mm, und einen zylindrischen Durchmesser von ca. 5 - 20 mm, vorzugsweise 5 - 10 mm, aufweisen.

5. Streumaterial nach einem der Ansprüche 1 - 4, **dadurch gekennzeichnet, dass** die Formlinge oder Pellets in kubischer Form vorliegen, wobei Höhe bzw. Länge und Breite bzw. Tiefe den Maßangaben gemäß Anspruch 4 entsprechen.

6. Streumaterial nach einem der Ansprüche 1 - 5, **dadurch gekennzeichnet, dass** die Formlinge, Pellets oder Kuben eine Dichte von ca. 1,0 - 1,3 g/cm³ bzw. ein äquivalentes Schüttgewicht von ca. 480 - 720 kg/m³ besitzen.

7. Streumaterial nach einem der Ansprüche 1 - 6, **dadurch gekennzeichnet, dass** es eine Saugkapazität für Flüssigkeiten bzw. fluide Stoffe besitzt, die höher liegt als 100 Vol.-% des Eigenvolumens.

8. Verwendung des durch Ad- bzw. Absorption mit Flüssigkeit gesättigten Stickstoff und ggf. Phosphor enthaltenden Streumaterials als Düngemittel für Halm- und Wurzelfrüchte.

9. Streumaterial nach einem der Ansprüche 1 - 8, **dadurch gekennzeichnet, dass** die Bitterstoffe in Form von pflanzlichen und synthetischen Stoffen, insbes. Kräutern, Fliegenholz, synthetischen oder natürlichen Aromastoffen in fester, flüssiger oder gasförmiger Konsistenz beigegeben werden.

10. Verwendung von Bitterstoffen in Form von pflanzlichen und synthetischen Stoffen, insbes. in Form von Bitterkräutern, Fliegenholz, Aromastoffen synthetischer oder natürlicher Art, in fester, flüssiger oder gasförmiger Konsistenz, in Streumaterial für Huftiere, vorzugsweise Pferde, um zu verhindern, dass die Tiere das Streumaterial aufnehmen und fressen.
